# EUROPÄISCHE PATENTSCHRIFT

(11) **EP 1 487 571 B1**
(45) Veröffentlichungstag und Bekanntmachung des Hinweises auf die Patenterteilung: **23.11.2005**
(21) Anmeldenummer: 03717154.3
(22) Anmeldetag: 13.03.2003
(51) Int. Cl.: B01J 20/28

(54) **TRÄGERPARTIKELN FÜR DIE CHROMATOGRAPHIE AUF DER GRUNDLAGE VON MIKROKAPSELN, VERFAHREN ZU IHRER HERSTELLUNG UND IHRE ANWENDUNG**
SUPPORT PARTICLES FOR CHROMATOGRAPHY BASED ON MICROCAPSULES, METHOD FOR THEIR PRODUCTION AND USE THEREOF
PARTICULES PORTEUSES POUR LA CHROMATOGRAPHIE A BASE DE MICROCAPSULES, PROCEDE DE PRODUCTION ET UTILISATION ASSOCIES

(30) Priorität: 14.03.2002 DE 10211300
(43) Veröffentlichungstag der Anmeldung: 22.12.2004
(73) Patentinhaber: L.U.M. GmbH, 12489 Berlin (DE)
(72) Erfinder: WOEHLECKE, Holger, 10179 Berlin (DE); EHWALD, Rudolf, 10115 Berlin (DE); Lerche, Dietmar, 12524 Berlin (DE)
(74) Vertreter: Wehlan, Helmut
(86) Internationale Anmeldenummer: PCT/DE2003/000891
(87) Internationale Veröffentlichungsnummer: WO 2003/078048

(56) Entgegenhaltungen:
- DE-A- 3 347 512
- DE-A- 3 821 619
- DE-A- 19 902 724
- US-A- 4 257 884
- US-A- 4 698 317
- US-A- 5 770 416

## Beschreibung

Die Erfindung betrifft Trägerpartikeln für die Chromatographie auf der Grundlage von Mikrokapseln mit poröser Wand, Verfahren zu ihrer Herstellung und ihre Verwendung sowie Verfahren zur ausschlusschromatographischen Stofftrennung zwischen extrem hochmolekularen Polymeren bzw. feindispersen Partikeln und allen übrigen Bestandteilen einer Mischprobe. Die erfindungsgemäßen Trägerpartikeln stellen Mikrokapseln mit einer druckfesten und gleichzeitig für Makromoleküle hochdurchlässigen Wand dar oder enthalten solche Mikrokapseln. Dieses Trägermaterial ist für chromatographische Anwendungen besonders geeignet, wo es auf den schnellen Austausch von Polymermolekülen der Größe von Proteinen und Polymermolekülen bis zu einer bestimmten Teilchengröße, die zweihundert nm betragen kann, mit der stationären Flüssigphase ankommt.

Native DNA, hochmolekulare RNA, bestimmte Polysaccharide wie Glykogen, Dextran Hyaluronsäure und hochmolekulare Polyacrylsäure erreichen im solvatisierten Zustand Molekülgrößen von mehreren hundert nm. Die Ausnutzung des Größenunterschiedes zur Abtrennung derartiger extrem großer Polymermoleküle aber auch von Partikeln mit einer Größe im Submikrometerbereich wie z.B. Viren oder Chromosomen von einem komplexen Gemisch kleinerer Polymere ist in vielen konkreten Fällen noch nicht möglich. Ultrafiltermembranen werden leicht durch Verstopfung der Poren oder die Auflagerung einer Gelschicht undurchlässig für den Volumenfluss. Dialysemembranen zeigen gewöhnlich keine ausreichende Permeabilität für Makromoleküle. Die Verfahren der Elektrophorese und Elektrofokussierung sind nicht nur von der Molekül- oder Teilchengröße sondern von den ionischen Eigenschaften der Moleküle oder Teilchenspezies und des Mediums abhängig. Die Sedimentationsgeschwindigkeit in der Ultrazentrifuge wird nicht nur von der Teilchengröße sondern auch vom Dichteunterschied zur Lösung bestimmt.

Ein besonders effizientes Verfahren zur Trennung von Polymeren nach ihrer Größe besteht bekanntlich in der Ausschlusschromatographie. Das bekannte Verfahren der Gelchromatographie ist hinsichtlich der Molekülgröße nach oben begrenzt, weil auch bei sehr großer Ausschlussgrenze die Diffusion extrem großer Moleküle in der Tiefe des Porensystems der Partikeln zu langsam erfolgt. Dies führt dazu, dass die für den Trennvorgang erforderliche Auflösung im Bereich sehr hoher Molekülgrößen nur bei sehr geringen Fließgeschwindigkeiten erreicht wird und präparative Anwendungen nicht mehr zweckmäßig sind.

Die Aufgabe der Erfindung besteht in der Bereitstellung eines neuen Typs von Trägermaterialen für die Chromatographie, die sich durch einen hohen Volumenanteil der stationären Flüssigphase und einen sehr schnellen Austausch von Proteinen und anderen hydrophilen Polymeren mit Stokesschen Radien von mindestens 20 nm auszeichnen. Außerdem besteht die Aufgabe der Erfindung darin, Verfahren zur Herstellung derartiger Trägermaterialien und bisher nicht mögliche Anwendungen der neuen Trägermaterialien in der Chromatographie bereitzustellen.

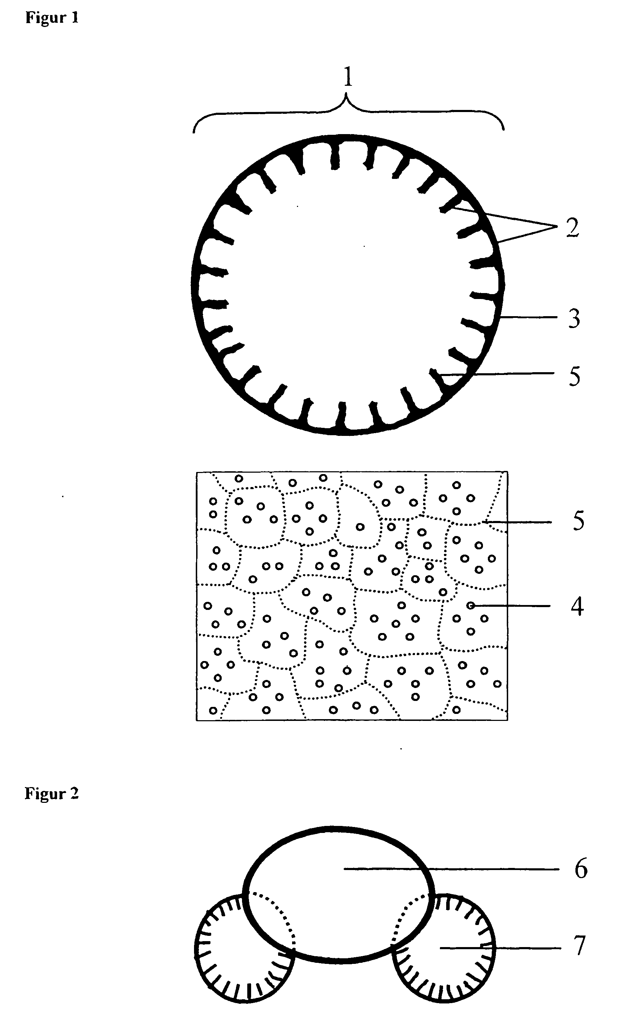

Die Aufgabe wird durch die Bereitstellung von Trägerpartikeln gelöst, deren Aufbau in Figur 1 dargestellt ist. Die erfindungsgemäßen Trägerpartikeln sind dadurch gekennzeichnet, dass die Trägerpartikeln Mikrokapseln (1) einer Größe zwischen 5 und 50 µm darstellen oder enthalten, die Wand der Mikrokapseln (2) eine kontinuierliche, aber hydrophile selektive und poröse Trennschicht (3) mit einer Dicke unter 500 nm besitzt, die Poren (4) in der Trennschicht zwischen 50 und 500 nm weit sind, der mittlere Porenabstand unter 3 µm beträgt und die Wand eine mechanisch rigide und in Wasser nicht oder wenig quellfähige Stützstruktur (5) aufweist, deren Anteil am Kapselvolumen unter 10 % liegt.

Diese Merkmale gewährleisten, dass im chromatographischen Bett eine stationäre Flüssigphase mit hohem Volumenanteil entsteht, mit der alle üblicherweise in komplexen natürlichen oder biologischen Systemen bzw. in Polymersyntheseansätzen vorhandenen Makromoleküle mit Ausnahme extrem großer Makromoleküle austauschen können. Die geringe Länge der Poren und der geringe Porenabstand gewährleisten eine hohe Permeabilität für Makromoleküle auch bei geringem Flächenanteil der Poren. Die permeablen Moleküle haben ein Elutionsvolumen, das dem Gesamtvolumen des im Kapselvolumen und im Zwischenkornvolumen vorhandenen Elutionsmittels entspricht, und werden mit gutem Auflösungsvermögen in Form eines scharfen Peaks von den ausgeschlossenen Molekülen oder Teilchen getrennt. Dies trifft auch dann zu, wenn ihre Größe nur wenig unterhalb der Porenweite liegt. Die geringe Dicke der Trennschicht und der geringe Porenabstand sind für die Erfindung wesentlich. Sie bewirken, dass die Diffusionsverzögerung im Porenraum minimal ist. Die erfindungsgemäße Größe der Mikrokapseln gewährleistet eine ausreichend geringe Diffusionszeit in der stationären Flüssigkeit im Lumen der Mikrokapseln selbst bei sehr großen Molekülen und ermöglicht eine Komgröße, die eine schnelle Strömung bei geringem Druck ermöglicht. Dies ist wesentlich, um das scherbedingte Zerreißen empfindlicher Molekülaggregate oder stark gequollener Polymermoleküle zu vermeiden. Da die Stützstruktur in Wasser nur wenig quellfähig ist, gewährleistet sie selbst bei geringem Volumenanteil ihres Feststoffes eine für die Chromatographie mit feinkörnigem Material ausreichende Druckstabilität der Mikrokapseln. Die durchlässige Stützstruktur gewährleistet, dass diese selbst für alle durch die Trennschicht permeablen Teilchen keinen zusätzlichen Diffusionswiderstand erzeugt. Die erfindungsgemäßen Trägerpartikeln können entweder aus einer Mikrokapsel bestehen oder Partikeln darstellen, die eine oder mehrere Mikrokapseln mit den erfindungsgemäßen Merkmalen enthalten.

Mikrokapseln mit einer für die Chromatographie von Polymeren optimalen Größe und guter Druckfestigkeit sind in der Form von Sporopollenin-Mikrokapseln bekannt. Sporopollenin ist in partikulärer Form und günstiger Größe in Form von Sporen und Pollen, in denen es natürlicherweise vorkommt, eine interessante Rohstoffquelle für die Herstellung von neuen chromatographischen Trägerpartikeln. Es ist bekannt, dass Sporopolleninpartikeln, die aus Bärlappsporen gewonnen werden, sehr günstige mechanische Festigkeiten und eine extrem hohe chemische Beständigkeit in einer Vielzahl von Lösungsmitteln, u.a. starken Säuren und Basen besitzen (Mackenzie und Shaw, 1980, Int. J. Peptide Protein Res. 15, 298-300). Da das aus Sporopollenin bestehende Sporoderm keine Makroporen besitzt und eine geringe Permeabilität selbst für niedermolekulare Stoffe aufweist, ist die Entfernung des Protoplasmas aufwändig. Lycopodium-Sporopolleninpartikeln werden als Festphase für spezielle Anwendungen (Peptidsynthese) eingesetzt, und sie werden auch zur Immobilisierung spezifischer Liganden eingesetzt (Pehlivan und Yildiz, 1994, Sep. Sci. Technol. 29, 887-895). Dabei kann nur die äußere Oberfläche genutzt werden. Eigene Experimente haben ergeben, dass bei diesen Partikeln wegen der geringen Permeabilität des Sporoderms eine Nutzung der Innenphase für die Chromatographie nicht möglich oder sehr erschwert ist. Bis zu einem gewissen Grade trifft dies auch für die leichter zu isolierenden aus Sporopollenin bestehenden Exinekapseln von verschiedenen Angiospermenpollen zu, welche als Mikrokapseln für verschiedene biotechnologische Anwendungen in Frage kommen (Patentanmeldung DE 19902724 A1). Die gereinigten Sporopolleninhüllen von Birken-, Erlen- oder Haselnusspollen zeigen sehr gute hydrodynamische Eigenschaften. Bei ihnen ist der Austausch zwischen Kapsellumen und strömender äußerer Phase, der fast ausschließlich durch eine begrenzte Zahl von mikroskopisch sichtbaren Poren erfolgt, möglich. Die vollständige Exine von Pollen enthält in aller Regel eine dichte, porenarme und semipermeable Schicht, die Endexine. Wegen des geringen Flächenanteils und der geringen Weite der Poren in dieser Schicht ist die Diffusionsgeschwindigkeit für gelöste Substanzen begrenzt, so dass die erreichbare Zahl der Trennstufen im chromatographischen Prozess gering ist und bei vertretbaren Trennzeiten nicht den Anforderungen an eine leistungsfähige Chromatographie entspricht. Diese Diffusionsverzögerung ist eine schwerwiegende Begrenzung des Einsatzes von Sporopolleninträgern in der Chromatographie. An Sporopolleninkapseln, die aus polyporaten Exinen bestehen, ist die Diffusionsgeschwindigkeit jedoch ausreichend für andere Anwendungen wie die Verkapselung von Biokatalysatoren oder lebenden Zellen (Patentanmeldung DE 19902724 A1).

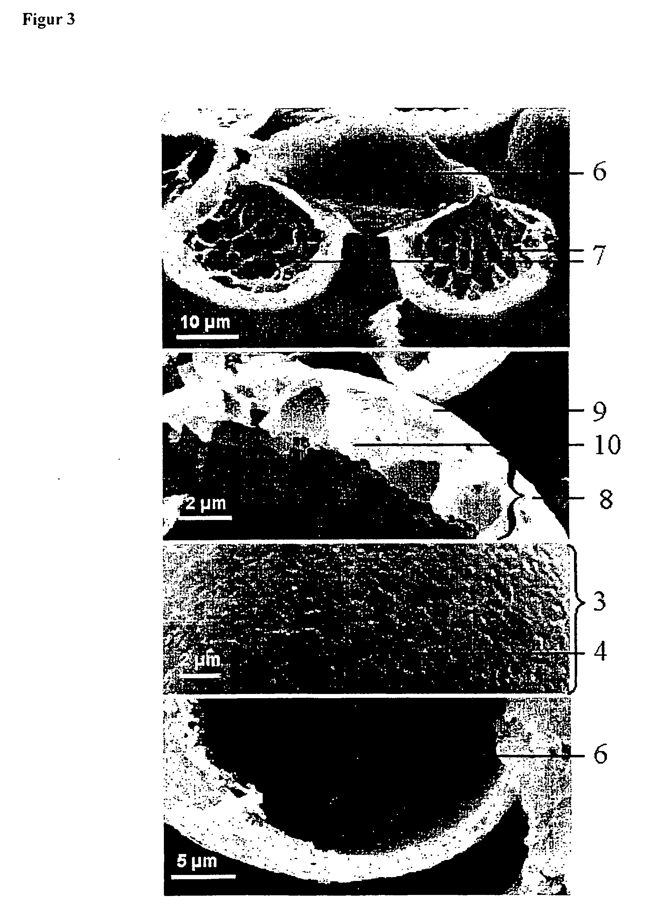

Zufällig wurde gefunden, dass die aus Koniferenpollen hergestellten Sporopollenin-Mikrokapseln die Merkmale der erfindungsgemäßen Trägerpartikeln aufweisen und sich hervorragend für die Abtrennung von extrem großen Polymermolekülen aus einem Polymergemisch eignen. Die Exine der Koniferenpollen (Figuren 2 und 3) bildet eine Zentralkapsel (6), die den männlichen Gametophyten umgibt und in der gereinigten Exine ein austauschbares Lumen besitzt, sowie zwei daran anliegende Luftsäcke (7), welche von der äußeren Schicht der Exine, der sogenannten Sexine (8), begrenzt werden. Die Sexine besteht aus Sporopollenin und besitzt eine etwa 100 nm dicke kontinuierliche Deckschicht, das Tectum (9), und eine ca. 3000 nm dicke wabenartige durchlässige Stützstruktur, die Baculae (10). Es war bisher nicht bekannt, dass die beschriebene Exinestruktur für Makromoleküle hochpermeabel ist. Überraschend zeigte sich, dass der Austausch selbst großer Polymermoleküle wie des Immunglobulins IG_{M} mit einer Molmasse von 900 000 Da (Dalton) kaum durch die Membran sondern überwiegend durch den Widerstand der stationären Flüssigkeit im Lumen bestimmt wird. Ebenso unbekannt war, dass die Exine dieser Luftsäcke eine scharfe Ausschlussgrenze besitzt. Aus der Kleinheit der Luftsäcke, der hohen Permeabilität der Exine für hochmolekulare Stoffe und der scharfen Ausschlussgrenze ergibt sich die bisher in der Ausschlusschromatographie noch nicht realisierte Möglichkeit für eine effiziente chromatographische Abtrennung von ausgeschlossenen feindispersen Teilchen oder sehr hochmolekularen Kolloiden von permeablen Makromolekülen bis zu einem Stokesschen Radius von ca. 100 nm. Damit können erstmalig sehr große Kolloide oder Teilchen (z.B. hochmolekulare Hyaluronsäure, Glykogen, ungespaltene DNA, Viren, Chromosomen) von der Masse der Biopolymere (Proteine, Polysaccharide mit üblichem Polymerisationsgrad, Spaltprodukte von hochmolekularer DNA) in einem Schritt effizient getrennt werden. Die gereinigte Exine von Koniferenpollen zeigt hervorragende mechanische Eigenschaften. Wegen der sehr kurzen Diffusionszeit selbst für sehr große Makromoleküle bei der Gleichgewichtseinstellung mit dem Lumen der Luftsäcke lassen sich diese von der extrem hochpolymeren Fraktion oder der Teilchenfraktion bei hohen Fließgeschwindigkeiten sauber abtrennen und zeigen die kinetisch bedingte Trennstufenverbreiterung nur in einem geringen Ausmaß. Die semipermeable Exinestruktur der Zentralkapsel besitzt dagegen eine sehr niedrige Ausschlussgrenze. Proteine und andere Kolloide mit einem Stokesschen Radius von über 1,5 nm werden von ihr vollständig ausgeschlossen, während Salzionen permeabel sind. Für eine effiziente ausschlusschromatographische Nutzung der Zentralkapsel zur Entsalzung von Proteinen mit hoher Flussrate ist die Permeationsgeschwindigkeit der Salzionen in die Zentralkapsel nicht ausreichend. Bei geringer Flussrate kann jedoch an Koniferenexinen eine Gruppentrennung erzielt werden, bei der drei Größenklassen sauber voneinander getrennt werden: 1. die ausgeschlossene Fraktion von Kolloiden bzw. Teilchen mit einem Stokesschen Radius über 100 nm, 2. Kolloide und Polymere mit einem Stokesschen Radius unter 100 nm sowie 3. Salzionen und niedermolekulare Teilchen. Der wesentliche Vorteil der erfindungsgemäßen Sporopolleninkapseln für die Ausschlusschromatographie besteht jedoch in der Tatsache, dass ein großer Teil des intrapartikulären Verteilungsraumes, das Lumen der Luftsäcke, für eine ausschlusschromatographische Gruppentrennung mit extrem großer Trenngrenze genutzt werden kann. Um den Volumenanteil der Luftsäcke in der chromatographischen Packung entscheidend zu vergrößern, wurde ein Verfahren zur Herstellung der Trägerpartikeln entwickelt, bei dem wenn die Trägerteilchen aus einer Flüssigkeit getrocknet werden. Hierbei kommt es überraschenderweise zum Kollabieren der Zentralkapsel, während die Kapsel der Luftsäcke nicht oder nur wenig schrumpft. Da sich die Zentralkapsel in Wasser nicht wieder entfaltet, kann hierdurch die Selektivität der ausschlusschromatographischen Trennung (Peakabstand) von permeablen und ausgeschlossenen Hydrokolloiden verbessert werden.

Die gute Verfügbarkeit der Koniferenexine ist auch vorteilhaft für solche chromatographischen Anwendungen von Sporopollenin, bei denen die chemische oder physikochemische Wechselwirkung niedermolekularer Probebestandteile und des Elutionsmittels mit dem Sporopollenin oder immobilisierten Phasen ausgenutzt wird (Adsorptions- und Verteilungschromatographie, Affinitätschromatographie, Chromatographie an immobilen chiralen Phasen). Für all diese Anwendungen ist die hohe Permeabilität der Exinestruktur an der Oberfläche der Luftsäcke günstig, während die geringe Permeabilität der Exine an der Oberfläche der Zentralkapsel nachteilig ist; denn für alle Moleküle, die mit dem Lumen der Zentralkapsel austauschen können, ist eine starke Abhängigkeit der Peakvarianz von der Fließgeschwindigkeit festzustellen. Um diesen Nachteil zu beseitigen, wurde ein Verfahren zur Herstellung der Trägerpartikeln entwickelt, bei dem die Sporopolleninkapseln aus der Exine von solchen Koniferenpollen isoliert werden, bei denen die Exinestruktur der Zentralkapsel durch Keimung oder osmotisch bedingtes Platzen zuvor perforiert wurde. Chromatographische Säulen, die mit derartigen Exinen gefüllt werden, zeigen ebenso gute mechanische Eigenschaften (Druckbeständigkeit, Konstanz des Fließwiderstandes) wie die nicht perforierten Exinen. Mit ihnen lassen sich auch bei hohen Flussraten (> 5 mm/min) sehr niedrige Trennstufenhöhen für die permeablen Stoffe erzielen (0,1 bis 0,2 mm).

Die Erfindung betrifft des weiteren ein Verfahren zur ausschlusschromatographischen Stofftrennung zwischen extrem hochmolekularen Polymeren bzw. feindispersen Partikeln und allen übrigen Bestandteilen einer Mischprobe, einschließlich aller Proteine und vergleichbar großer Teilchen, das darin besteht, dass Mischproben auf ein flüssigkeitsgesättigtes Bett aus den erfindungsgemäßen Trägerpartikeln aufgetragen und seine Bestandteile von diesem Bett eluiert werden. Dazu wird der Probe ein permeabler Farbstoff beigemischt und zur Isolation der ausgeschlossenen Polymeren oder Partikeln das Eluat, das mit einem relativen Elutionsvolumen zwischen etwa 20 % des Bettvolumens und dem Austritt des Farbstoffes das Bett verlässt, gesammelt. Als Elutionsmittel wird eine wässrige Lösung von Ammoniumhydrogencarbonat oder einem anderen flüchtigen Salz eingesetzt. Dazu wird das Elutionsmittel auf das trockene Bett aufgetragen.

Das erfindungsgemäße Verfahren lässt sich auch zur chromatographischen Reinigung von hochmolekularen Stoffen einsetzen.

Die erfindungsgemäßen Verwendungen der neuen Trägerpartikeln bestehen ferner darin, dass sie sich zur Abtrennung oder Reinigung von DNA oder hochmolekularer RNA von den übrigen Bestandteilen eines proteinreichen Rohextraktes sowie zur Abtrennung oder Reinigung hochmolekularer Fraktionen aus einem polydispersen Polymergemisch eignen.

Mikrokapseln aus dem Sporopollenin der Koniferenpollen lassen sich ohne Schrumpfen der Luftsäcke aus bestimmten organischen Flüssigkeiten, z.B. Aceton, trocknen. Das entstandene Pulver lässt die Anwendung in chromatographischen Trockenbetten entsprechend dem Patent DD 278482 A3 zu. Hierdurch können Biopolymere und Kolloide mit extrem hohem Polymerisationsgrad von solchen mit geringerer Größe abgetrennt und gleichzeitig konzentriert werden.

Die Merkmale der Erfindung gehen aus den Elementen der Ansprüche und aus der Beschreibung hervor, wobei sowohl einzelne Merkmale als auch mehrere in Form von Kombinationen vorteilhafte Ausführungen darstellen, für die mit dieser Schrift Schutz beantragt wird. Diese Merkmale bestehen aus bekannten - Mikrokapseln, Kieferpollen, Sporopolleninträger - und aus neuen Elementen - Eignung der Kieferpollen zur Gewinnnung der erfindungsgemäßen Trägerpartikeln, Sporopolleninträgerpartikeln aus Kieferpollen mit den neuen Anwendungen, die hohe Porosität der Luftsäcke - die in ihrer neuen Kombination zu den erfindungsgemäßen vorteilhaften Trägerpartikeln führen, die in ihrer Gesamtheit einen synergistischen Effekt ergeben, der darin besteht, dass Trägerpartikeln für die Chromatographie zur ausschlusschromatographischen Stofftrennung zwischen extrem hochmolekularen Polymeren bzw. feindispersen Partikeln und allen übrigen Bestandteilen eines Stoffgemisches zur Verfügung gestellt werden.

Die Erfindung soll anhand von Ausführungsbeispielen näher erläutert werden, ohne auf diese Beispiele beschränkt zu sein.

### Anwendungsbeispiele

1. Aus den Pollen der Waldkiefer (*Pinus sylvestris* L.) wurden Sporopolleninkapseln entsprechend der Patentanmeldung DE 19902724 A1 hergestellt und in einer Chromatographiesäule an eine HPLC-Apparatur angeschlossen. Erwartungsgemäß wurden kleine Moleküle wie Glycerol oder NaCl an dieser Säule mit einem Elutionsvolumen detektiert, das ca. 95 % des Bettvolumens entsprach. Dabei zeigte sich, dass die Peakvarianz mit Zunahme der Fließgeschwindigkeit zunahm. Die kinetisch bedingte Peakverbreiterung ist bereits bei Zuckern beträchtlich. Größere Moleküle wie Evans Blue werden von der Zentralkapsel ausgeschlossen. Überraschend zeigte sich jedoch, dass das Elutionsvolumen von Proteinen, einschließlich solcher mit einem Molekulargewicht von über 900 000 Dalton 60 % des Bettvolumens betrug und damit deutlich über dem Zwischenkornvolumen lag. Die Proteine und weitere Polymermoleküle verließen das Bett als scharfer Peak, dessen Varianz überraschenderweise nicht von der Fließgeschwindigkeit abhing. Wurde jedoch ein Dextran mit einer Molmasse von 5 bis 40 Millionen Dalton durch das Bett eluiert, verließ der größte Teil dieses Polymers die Säule mit dem Zwischenkornvolumen (ca. 35%) als scharfer Peak. Dextran mit einem mittleren Molekulargewicht von 2 Millionen Dalton wurde in zwei Fraktionen aufgetrennt, von denen eine mit dem Zwischenkornvolumen und die andere mit dem Ausschlussvolumen eluiert wurde. Die nähere morphologische Untersuchung der Sporopolleninkapseln ergab, dass die Zentralkapsel eine sehr dichte und feinporige Membran besitzt, welche nur für sehr kleine Moleküle permeabel ist und die Proteinmoleküle und weitere Polymere vollkommen ausschließt, während die Luftsäcke die o.g. Merkmale des erfindungsgemäßen Trägermaterials besitzen. Hierdurch wurde erklärlich, dass die Proteine, unabhängig von ihrer Größe als scharfer Peak mit einem relativen Elutionsvolumen von 60 % das Bett verlassen. Die überraschende und für die Biotechnologie bedeutungsvolle Größentrennung zwischen den Biopolymeren im Größenbereich der Proteine und extrem großen Polymermolekülen oder Teilchen, aber auch die hohe Druckfestigkeit der Träger erklärt sich aus dem Bau der Luftsäcke. Letztere werden durch die äußere Schicht der Exine, die sogenannte Sexine gebildet, die in eine äußere kontinuierliche Deckschicht, das Tectum und eine alveolare Stützschicht differenziert ist. In der Stützschicht ist das Sporopollenin in Form von Waben, die nach innen offen sind, angeordnet. Die Deckschicht ist etwa 200 nm dick und besitzt ca. 200 nm weite Poren mit einem geringen Flächenanteil aber einer großen Dichte. Der mittlere Abstand zwischen den Poren beträgt 1 bis 2 µm. Durch den geringen Abstand zwischen den Poren und die geringe Stärke des Tectums wird die Diffusion der Makromoleküle in die Tiefe der Kapseln nur wenig verzögert. Die Analyse des Einflusses der Fließgeschwindigkeit auf die Peakvarianz mit Hilfe der Giddings-Gleichung ergab überraschenderweise, dass der Diffusionswiderstand der Luftsäcke nicht wesentlich höher ist als der theoretische Diffusionswiderstand einer ungerührten Flüssigkeitszone mit der Größe der Luftsäcke.

2. Um den Austausch mit der Zentralkapsel zu beschleunigen, wurden Sporopolleninträger aus Kiefempollen hergestellt, deren Exine an der Zentralkapsel auf osmotischem Wege oder durch Keimung zerrissen war. Diese Träger zeigen ein einheitliches Elutionsvolumen aller permeablen Stoffe bei etwa 95 % des Bettvolumens.

3. Um den Volumenanteil der Zentralkapsel zu reduzieren, wurden die aus Kiefernpollen hergestellten Sporopolleninträger aus Flüssigkeiten wie Ethanol, Aceton, Benzin oder Wasser getrocknet. Dabei kollabierte das Lumen der Zentralkapsel, da sich wegen der Feinporigkeit der inneren Exineschichten beim Verdunsten der Flüssigkeit eine starke Kohäsionsspannung entwickelt. Dagegen bleiben die Luftsäcke entfaltet. Sie werden durch die relativ großen Poren und die mechanischen Stützstrukturen vor dem Kollabieren geschützt. Unerwartet war, dass die Partikeln beim Trocknen nicht verklumpten. Das trockene Pulver wurde in eine Säule mit einer Betthöhe von 3 cm und einem Bettvolumen von 0,8 ml eingefüllt und diese in die Elutionsflüssigkeit (100 mM Ammoniumhydrogencarbonat) gestellt. Das Bett war in kurzer Zeit mit dem Elutionsmittel gesättigt und wurde am nächsten Tag zur ausschluss-chromatographischen Trennung zwischen Serumalbumin und einem hochmolekularen kommerziellen Präparat von DNA (Kalbsthymus) eingesetzt. Bei einer linearen Flussrate von 0.3 cm/min konnte die proteinfreie DNA nach einer Zeit von ca. 10 min aufgefangen werden. Die Länge der Säule war so berechnet, dass der größte Teil der DNA vor den Proteinen eluiert wird. Um die Vermischung der Proben im Detektor zu vermeiden, wurden das Eluat direkt am Säulenausgang gesammelt. Ein hierzu geeignetes Verfahren besteht darin, die Probe vor dem Auftragen auf die miniaturisierte Säule mit einer kleinen Menge an Evans-Blue, einem Farbstoff, der mit der Proteinfraktion eluiert wird, zu versetzen. Nach dem Auftragen der Probe (50 µl) auf das Bett (700 µl) eluiert man mit 120 µl der Elutionsflüssigkeit (0,1 M Ammoniumhydrogencarbonat) und verwirft das Eluat. Anschließend wird das Eluat so lange gesammelt, bis der Farbstoff austritt. In den farbstofffreien Fraktionen (ca. 200 µl) befindet sich der größte Teil der DNA in proteinfreier Form, wie man am Spektrum nachweisen kann. Da die Elutionsflüssigkeit außer der DNA nur flüchtige Bestandteil enthält, entsteht beim Lyophilisieren hochgereinigte DNA.

4. Ein chromatographisches Bett der Sporopolleninkapseln mit einer Länge von 6 cm und einem Volumen von 12 ml wurde an eine HPLC-Apparatur mit einem UV-Detektor angeschlossen. Als Elutionsmittel wurde 100 mM Ammoniumhydrogencarbonat eingesetzt. Als Probe wurden 500 µl eines Rohextraktes nach kurzem Zentrifugieren mit geringer Beschleunigung aufgetragen. Die Rohextrakte wurden aus Pflanzenzellen einer Suspensionskultur durch Zermörsern in flüssigem Stickstoff und Vermischen mit einem sogenannten Lysepuffer, der zur Gewinnung von genomischer DNA aus biologischen Proben üblicherweise eingesetzt wird, gewonnen. Der Lysepuffer enthielt zur Denaturation hydrolytischer Enzyme Natriumdodecylsulfat. Das Elugramm zeigte einen Ausschlusspeak, dessen Elutionszeit dem Zwischenkornvolumen entsprach. Dieser Peak war mit großem Abstand von der Proteinfraktion getrennt und enthielt die genomische DNA, wie durch Elektrophorese gezeigt werden konnte. Zwischen der Proteinfraktion und dem Ausschlusspeak wurde die Basislinie allerdings nicht erreicht. In einem folgenden Experiment wurden die zermörserten Zellen in einem modifizierten Lysepuffer aufgenommen, der kein Natriumdodecylsulfat, dafür aber RNAase enthielt. Natriumdodecylsulfat wurde erst nach der Abtrennung der Zelltrümmer und einer Inkubationszeit von 10 min hinzugegeben. Die Chromatographie dieses Extraktes führte dazu, dass die DNA-Fraktion im Elugramm als scharfer Peak erschien, der von der Proteinfraktion durch die Basislinie getrennt war. Das Elugramm wird dementsprechend vor dem Erscheinen der Proteinfraktion durch die DNA, und falls vorhanden, durch hochmolekulare RNA (mRNA und rRNA) bestimmt.

### Bezugszeichenliste

- 1 -: Mikrokapsel
- 2 -: Wand
- 3 -: Trennschicht
- 4 -: Poren
- 5 -: Stützstruktur
- 6 -: Zentralkapsel
- 7 -: Luftsäcke
- 8 -: Sexine
- 9 -: Tectum
- 10 -: Baculae

### Legende zu den Figuren

**Figur 1**
   Figur 1 (oben) zeigt einen schematischen Schnitt durch eine Mikrokapsel. Figur 1 (unten) stellt einen Ausschnitt einer schematischen Aufsicht auf die Trennschicht einer Mikrokapsel dar.
**Figur 2**
   Eine Schematische Ansicht der Exine der Koniferenpollen wird in Figur 2 gezeigt.
**Figur 3**
   Rasterelektronenmikroskopische Aufnahmen der Exine von Koniferenpollen (z.T. nach Gefrierschnitt) werden in Figur 3 abgebildet.

## Patentansprüche

1. Trägerpartikeln für die Chromatographie auf der Grundlage von Mikrokapseln mit poröser Wand, **dadurch gekennzeichnet, dass**
• die Trägerpartikeln aus Mikrokapseln (1) mit einem Durchmesser zwischen 5 und 50 µm bestehen oder solche Mikrokapseln enthalten,
• die Wand (2) der Mikrokapseln eine kontinuierliche, aber hydrophile selektive und poröse Trennschicht (3) mit einer Dicke unter 500 nm besitzt,
• die Poren (4) in der Trennschicht zwischen 50 und 500 nm weit sind,
• der mittlere Porenabstand unter 3 µm beträgt und
• die Wand außerdem eine mechanisch rigide und in Wasser nicht oder wenig quellfähige Stützstruktur (5) aufweist, deren Anteil am Kapselvolumen unter 10 % liegt.

2. Trägerpartikeln nach Anspruch 1, **dadurch gekennzeichnet, dass** das Feststoffgerüst der Partikeln aus Sporopollenin besteht und durch die gereinigte Exine von Koniferenpollen gebildet wird, welche die Wand einer Zentralkapsel (6) mit geringer Größenausschlussgrenze und zweier angrenzender Luftsäcke (7) formt und worin die Luftsäcke Mikrokapseln (1) mit den in Anspruch 1 genannten Merkmalen darstellen.

3. Trägerpartikeln nach Anspruch 2, deren Zentralkapsel teilweise oder vollständig kollabiert ist.

4. Trägerpartikeln nach Anspruch 2 oder 3, deren Zentralkapsel durch Zerreißen der Exine geöffnet ist.

5. Verfahren zur Herstellung von Trägerpartikeln nach Anspruch 3 durch Trocknung der Koniferenexinen aus einer Flüssigkeit.

6. Verfahren zur Herstellung von Trägerpartikeln nach Anspruch 4 durch Keimung oder osmotisch bedingte Perforation der Koniferenexine an der Zentralkapsel.

7. Verfahren zur ausschlusschromatographischen Stofftrennung unter Verwendung von Trägerpartikeln nach Anspruch 1 bis 4 zwischen extrem hochmolekularen Polymeren oder feindispersen Partikeln und allen übrigen Bestandteilen einer Mischprobe, einschließlich aller Proteine und vergleichbar großer Teilchen, **dadurch gekennzeichnet, dass** die Mischproben auf ein flüssigkeitsgesättigtes Bett aus Trägerpartikeln aufgetragen und seine Bestandteile von diesem Bett eluiert werden.

8. Verfahren nach Anspruch 7, **dadurch gekennzeichnet, dass** der Probe ein permeabler Farbstoff beigemischt wird und zur Isolation der ausgeschlossenen Polymeren oder Partikeln das Eluat, das mit einem relativen Elutionsvolumen zwischen etwa 20 % des Bettvolumens und dem Austritt des Farbstoffes das Bett verlässt, gesammelt wird.

9. Verfahren nach Anspruch 7 oder 8, **dadurch gekennzeichnet, dass** als Elutionsmittel eine wässrige Lösung von Ammoniumhydrogencarbonat oder einem anderen flüchtigen Salz eingesetzt wird.

10. Verfahren nach einem der Ansprüche 7 bis 9, wobei das Elutionsmittel auf das trockene Bett aufgetragen wird.

11. Verfahren nach Anspruch 7 zur chromatographischen Reinigung von hochmolekularen Stoffen, **dadurch gekennzeichnet, dass** ein Trägermaterial nach Anspruch 1 eingesetzt wird.

12. Verwendung eines Trägermaterials nach einem der Ansprüche 1 bis 6 oder eines Verfahrens nach einem der Ansprüche 7 bis 9 zur Abtrennung von DNA oder hochmolekularer RNA von den übrigen Bestandteilen eines proteinreichen Rohextraktes.

13. Verwendung eines Trägermaterials nach einem der Ansprüche 1 bis 6 oder eines Verfahrens nach einem der Ansprüche 7 bis 9 zur Abtrennung der hochmolekularen Fraktion aus einem polydispersen Polymergemisch.

14. Verwendung nach Anspruch 12 und 13 zur Abgetrennung von Biopolymeren und Kolloiden mit extrem hohem Polymerisationsgrad von solchen mit geringerer Größe und zur gleichzeitigen Konzentrierung dieser Biopolymere und Kolloide.

## Claims

1. Support particles for chromatography on the basis of microcapsules with a porous wall, **characterised in that**
• the support particles consist of or contain microcapsules (1) with a diameter between 5 and 50 µm,
• the microcapsules' wall (2) possesses a continuous, but hydrophilic, selective and porous separation layer (3) with a thickness less than 500 nm,
• the pores (4) in the separation layer have a width between 50 and 500 nm,
• the mean distance between the pores is less than 3 µm and that
• the wall additionally displays a supporting structure (5), which is mechanically rigid and not or only slightly swellable in water, wherein said supporting structure's portion of the capsule volume is less than 10%.

2. Support particles according to claim 1, **characterised in that** the solid matter framework of the particles consists of sporopollenin and is formed by the purified exine from conifer pollen, which forms the wall of a central capsule (6) with a low exclusion limit and two adjacent airbags (7), wherein the airbags constitute microcapsules (1) with the characteristics mentioned in claim 1.

3. Support particles according to claim 2, the central capsule of which has partly or entirely collapsed.

4. Support particles according to claim 2 or 3, the central capsule of which is open for reason of a rupture of the exine.

5. Method for the production of support particles according to claim 3 by drying the conifer exines from a liquid.

6. Method for the production of support particles according to claim 4 by germination or osmotically caused perforation of the conifer exine at the central capsule.

7. Method for the exclusion chromatographic substance separation under the employment of support particles according to claims 1 to 4, wherein the separation takes place between extremely high molecular polymers or fine-dispersed particles and all remaining components of a mixed sample including all proteins and comparably large particles, **characterised in that** the mixed samples are applied to a bed of the support particles being saturated with liquid and that the components of the mixed sample are eluted from this bed.

8. Method according to claim 7, **characterised in that** a permeable dye is added to the sample and that one collects the eluate leaving the bed at a relative elution volume between about 20% of the bed volume and the dye's discharge from the bed in order to isolate the excluded polymers or particles.

9. Method according to claim 7 or 8, **characterised in that** an aqueous solution of ammonium hydrogen carbonate or another volatile salt is used as the eluting agent.

10. Method according to one of the claim 7 to 9, wherein the eluting agent is applied to the dry bed.

11. Method according to claim 7 for the chromatographic purification of high-molecular substances, **characterised in that** a support material according to claim 1 is used.

12. Use of a support material according to one of the claims 1 to 6 or of a method according to one of the claims 7 to 9 for the separation of DNA or high-molecular RNA from the remaining components of a crude extract being high in proteins.

13. Use of a support material according to one of the claims 1 to 6 or of a method according to one of the claims 7 to 9 for the separation of the high-molecular fraction from a polydisperse polymer blend.

14. Use according to claim 12 and 13 for the separation ofbiopolymers and colloids having an extremely high degree of polymerization from those with a minor size and for the simultaneous concentration of these biopolymers and colloids.

## Revendications

1. Particules vecteurs servant à la chromatographie sur base de microcapsules ayant une paroi poreuse **caractérisées en ce que**
• les particules vecteurs se composent de microcapsules (1) ayant un diamètre compris entre 5 et 50 µm ou contiennent de telles microcapsules,
• la paroi (2) de la microcapsule possède une couche de séparation (3) continue mais sélective, hydrophile et poreuse dont l'épaisseur est inférieure à 500 nm,
• les pores (4) présents dans la couche de séparation mesurent entre 50 et 500 nm de large,
• l'espacement moyen entre les pores est inférieur à 3 µm
• la paroi présente également une structure de base (5) mécaniquement rigide, gonflant peu ou pas du tout dans l'eau ; cette paroi représente moins de 10 % du volume de la capsule.

2. Particules vecteurs selon la revendication 1, **caractérisées en ce que** la structure du corps solide des particules se compose de sporopollenine et est constituée par l'exine purifiée de pollen de conifères ; cette exine constitue la paroi d'une capsule centrale (6) avec une faible limite d'exclusion de taille et deux poches d'air adjacentes (7) ; ces poches d'air représentent des microcapsules (1) possédant les caractéristiques mentionnées dans la revendication 1.

3. Particules vecteurs selon la revendication 2, dont la capsule centrale est entièrement ou en partie collabée.

4. Particules selon les revendications 2 ou 3, **caractérisées en ce que** l'ouverture de la capsule centrale est provoquée par le déchirement de l'exine.

5. Processus de fabrication de particules vecteurs selon la revendication 3 par assèchement des exines de conifère d'un liquide.

6. Processus de fabrication de particules vecteurs selon la revendication 4 par germination ou perforation osmotique des exines de conifère sur la capsule centrale.

7. Processus de séparation des matières sur base de la chromatographie d'exclusion moyennant l'utilisation de particules vecteurs selon les revendications 1 à 4 ; ce processus vise à séparer les polymères de masse moléculaire extrêmement élevée ou les particules finement dispersées de tous les autres composants d'un échantillon de mélange, en ce compris toutes les protéines et autres particules de taille équivalente et est **caractérisée en ce que** les échantillons de mélange sont appliqués sur un lit saturé en fluide composé de particules vecteurs et **en ce que** ses composants sont élués par ce lit.

8. Processus selon la revendication 7, **caractérisé en ce que** un colorant perméable est ajouté à l'échantillon et **en ce que** l'éluat est récolté afin d'isoler les polymères et autres particules exclus, cet éluat étant extrait du lit avec un volume d'élution relatif entre env. 20 % du volume du lit et l'élimination du colorant.

9. Processus selon la revendication 7 ou 8, **caractérisé en ce qu'**une solution aqueuse de carbonate d'acide d'ammonium ou un autre sel volatil est utilisé comme agent d'élution.

10. Processus selon l'une quelconque des revendications 7 à 9, dans lequel l'agent d'élution est appliqué sur le lit asséché.

11. Processus selon la revendication 7 visant à la purification chromatographique des matières à la masse moléculaire élevée, **caractérisé en ce que** l'élément vecteur est utilisé selon la revendication 1.

12. Utilisation d'un élément vecteur selon l'une des revendications 1 à 6 ou un processus de l'une des revendications 7 à 9 visant à séparer l'ADN ou l'ARN de masse moléculaire élevée des autres composants d'un extrait brut riche en protéines.

13. Utilisation d'un élément vecteur selon l'une des revendications 1 à 6 ou d'un processus selon l'une des revendications 7 à 9 visant à séparer la fraction de masse moléculaire élevée d'un mélange polymère polydispersé.

14. Utilisation selon les revendications 12 et 13 visant à séparer des biopolymères et colloïdes avec un taux de polymérisation extrêmement élevé des biopolymères et colloïdes de plus petite taille et visant, simultanément, à concentrer ces biopolymères et colloïdes.
